(19) Europäisches Patentamt
European Patent Office
Office européen des brevets

(11) Numéro de publication: 0 147 414
B1

(12) **FASCICULE DE BREVET EUROPÉEN**

(45) Date de publication du fascicule du brevet: **18.05.88**

(51) Int. Cl.[4]: **H 04 L 27/14**

(21) Numéro de dépôt: **84901779.3**

(22) Date de dépôt: **04.05.84**

(86) Numéro de dépôt international: **PCT/FR 84/00123**

(87) Numéro de publication internationale: **WO 84/04640 (22.11.84 Gazette 84/27)**

(54) **PROCEDE DE DEMODULATION NON-COHERENTE D'UN SIGNAL MODULE LINEAIREMENT A ENERGIE PAR SYMBOLE CONSTANTE ET DEMODULATEUR POUR LA MISE EN OEUVRE DUDIT PROCEDE.**

(30) Priorité: **09.05.83 FR 8307711**

(43) Date de publication de la demande: **10.07.85 Bulletin 85/28**

(45) Mention de la délivrance du brevet: **18.05.88 Bulletin 88/20**

(84) Etats contractants désignés: **DE GB SE**

(56) Documents cité: **US-A-4 087 752**

(73) Titulaire: **VALLET, Robert, 14 rue des Fougères, F-91130 Ris- Orangis (FR)**

(72) Inventeur: **VALLET, Robert, 14 rue des Fougères, F-91130 Ris- Orangis (FR)**

(74) Mandataire: **Mongrédien, André, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 147 414 B1

LIBER, STOCKHOLM 1988

## Description

La présente invention concerne un procédé de démodulation non cohérente d'un signal modulé linéairement à énergie par symbole constante et un démodulateur pour la mise en oeuvre dudit procédé. Elle trouve notamment son application dans les liaisons par satellites et dans les communications radiomobiles.

Un signal numérique x(t), où t est une variable de temps, est en général un signal à bande étroite centré autour d'une fréquence $f_0$ appelée "fréquence porteuse" et de largeur de bande B. C'est donc un signal dont la densité spectrale est nulle en dehors de l'intervalle de fréquence $[f_0 -B/2, f_0+B/2]$.

En théorie du signal, il est courant de représenter ce signal numérique par son enveloppe complexe α(t), la relation entre x(t) et α(t) étant donnée par l'égalité

$x(t) = Re\,(\alpha(t) \cdot e^{jw_0t})$

où Re signifie "partie réelle de"

e signifie exponentielle

j est le nombre complexe tel que $j^2=-1$

et $w_0$ est la pulsation correspondant à la fréquence $f_0$.

La représentation complexe permettant un exposé plus clair, nous l'utiliserons préférentiellement dans la suite du texte.

Considérons une séquence de N symboles $a_0,\dots a_{N-1}$ ou N est un nombre entier, constituant une information à transmettre. N est par exemple de l'ordre de 64. Ces symboles sont des éléments d'un alphabet A qui est par exemple binaire. Il est classique, pour minimiser le taux d'erreur de transmission de la séquence de symboles $a_0,\dots,a_{N-1}$, de coder cette séquence en une autre séquence de symboles $\alpha_0,\dots,\alpha_{N-1}$, où chaque symbole de cette autre séquence appartient à un autre alphabet α qui est par exemple M-aire, où M est un nombre entier.

Cette séquence de symboles $\alpha_0,\dots,\alpha_{N-1}$ va être effectivement transmise par un signal modulé, la modulation étant réalisée par lesdits symboles. Dans le cas d'une modulation linéaire, l'enveloppe complexe α(t) du signal modulé x(t) contenant l'information à transmettre est alors représentée par l'expression

$$\sum_{k=0}^{N-1} \alpha_k \cdot g(t-kT)$$

où T est l'intervalle de temps s'écoulant entre la transmission de deux symboles successifs et g(t) est une fonction, à valeurs réelles ou complexes, décrivant la réponse impulsionnelle de l'ensemble des filtres d'émission telle que: $|\alpha k|^2 = 1$

$$\int_{-\infty}^{+\infty} |g(t)|^2 . dt,$$

egal à E, est l'énergie par bit.

On a représenté sur la figure 1 un dessin schématique illustrant la chaîne connue de modulation, transmission et démodulation des symboles $a_0,\dots,aN_{N-1}$. Ces symboles sont reçus séquentiellement dans un modulateur 2. Ils s'y succèdent espacés temporellement d'un intervalle de temps T. Le modulateur 2 comprend un moyen de codage 4 qui délivre en sortie la séquence de symboles $\alpha_0,\dots,\alpha_{N-1}$ espacés les uns des autres d'un intervalle de temps T. Il comprend aussi un moyen de modulation 6 qui délivre l'enveloppe complexe α(t) sous la forme de sa partie réelle Re(α(t)) et de sa partie imaginaire Im(α(t)). Ces deux signaux sont transposés en fréquence en modulant respectivement un signal $\cos(w_0t)$ délivré par un oscillateur 8 et un signal $-\sin(w_0t)$ délivré par un déphaseur 10 qui est relié en entrée à l'oscillateur 8. Les deux signaux modulés résultants sont additionnés. Leur somme constitue le signal émis x(t).

Ce signal émis x(t) subit au cours de sa transmission des perturbations représentées par l'ajout d'un bruit blanc gaussien b(t) de densité spectrale bilatérale $N_0/2$ en watt/hertz. Le démodulateur 12 reçoit donc un signal y(t) égal à x(t) + b(t). Ce signal est retransposé en fréquence en modulant un premier signal $2.\cos(w_0t+\Theta(t))$ issu d'un oscillateur 14 et un deuxième signal $-2.\sin(w_0t+\Theta(t))$ délivré par un déphaseur 16 qui est relié au même oscillateur 14. La phase Θ(t) de ces signaux n'est pas connue, dans le cas d'une démodulation non cohérente, mais sa variation est lente devant le débit binaire de la transmission. Les signaux modulés sont notés respectivement Re(r(t)) et Im(r(t)). Ce sont les composantes réelle et imaginaire de l'enveloppe complexe r(t) du signal y(t). Ces signaux sont filtrés par un moyen 18 de filtrage adapté de réponse impulsionnelle $g(t_0-t)$, où $t_0$ est une grandeur caractérisant le temps de transmission du signal tout au long de la chaîne. Un moyen 20 échantillonne ensuite ces signaux. Il délivre en sortie les parties réelle $Re(r_k)$ et imaginaire $Im(r_k)$ de l'observation $r_k$ o=u $0\leqslant k\leqslant N-1$. Ce moyen 20 réalise un échantillonnage à des dates séparées d'un intervalle de temps T.

Les observations $r_0,\dots,r_{N-1}$ sont appliquées séquentiellement sur l'entrée d'un moyen de calcul 22 qui délivre en sortie une séquence de symboles $\hat{\alpha}_0,\dots,\hat{\alpha}$ qui représentent les valeurs estimées les plus probables des symboles $\alpha_0,\dots,\alpha_{N-1}$ émis compte tenu des observations $r_0,\dots,r_{N-1}$. Si la transmission des symboles $\alpha_0,\dots,\alpha_{N-1}$ est

parfaite, les symboles $\hat{\alpha}_0,...,\hat{\alpha}_{N-1}$ sont respectivement identiques auxdits symboles $\alpha_0,...,\alpha_{N-1}$. La séquence de symboles $\hat{\alpha}_0,...,\hat{\alpha}_{N-1}$ obtenue est ensuite décodée par un moyen de décodage 24 qui délivre une séquence de symboles $\hat{a}_0,...,\hat{a}_{N-1}$. Ceux-ci sont respectivement identiques aux symboles $a_0,...,a_{N-1}$, si la transmission est parfaite.

La démodulation réalisée est dite non cohérente si la phase $\Theta(t)$ du signal émis par l'oscillateur 14 n'est pas connue. C'est le cas en particulier si cet oscillateur est libre, c'est-à-dire s'il n'est pas asservi au signal reçu y(t).

De manière générale, la démodulation, c'est-à-dire la détermination de la séquence des symboles $\hat{\alpha}_0,..., \hat{\alpha}_{N-1}$ la plus vraisemblable, minimise le taux d'erreur à la réception si les symboles émis sont équiprobables. On sait notamment par l'article "Optimum Reception of Digital Data over the Gaussian Channel with Unknown Delay and phase Jitter" de David D. Falconer paru dans IEEE Transactions on Information Theory, Janvier 1977, pages 117-126, que la fonction de vraisemblance, en réception cohérente, maximise:

$$\mathrm{Re}\left(\int_0^{NT} r^*(t).e^{j\theta(t)}.\alpha(t,...,\hat{\alpha}_{N-1}).\ dt\right)$$

en fonction des symboles $\hat{\alpha}_0,..., \hat{\alpha}_{N-1}$ où $r^*(t)$ est le complexe conjugué de r(t) et où $\Theta(t)$ caractérise la phase introduite par le canal de transmission.

Cette maximisation ne peut être conduite que dans le cas d'une démodulation cohérente où $\Theta(t)$ est une fonction connue du récepteur que l'on peut donc supposer nulle. Dans le cas d'une démodulation non cohérente, elle peut être maximisée si l'on suppose, ce qui est une hypothèse raisonnable, que $\Theta(t)$ est constante sur l'intervalle de temps [0, NT] et est considérée par le récepteur, comme une variable aléatoire équirépartie sur $[0,2\pi]$, cette constante étant inconnue du récepteur. On sait que la quantité à maximiser est alors:

$$\left|\int_0^{NT} r^*(t).\alpha(t,\ \hat{\alpha}_0,\ ...,\ \hat{\alpha}_{N-1}).\ dt\right|^2$$

En remplaçant $\alpha(t,\ \hat{\alpha}_0,\ ...,\ \hat{\alpha}_{N-1})$ par

$$\sum_{k=0}^{N-1} \hat{\alpha}_k.g(t-kT),\ \text{en posant}\ r_k = \int_0^{NT} r^*(t).g(t-kt).\ dt$$

et en remarquant que le carré de la norme d'un nombre complexe est égal au produit de ce nombre complexe par son conjugué, on peut remplacer la quantité à maximiser par la quantite équivalente

$$\sum_{k=0}^{N-1} \hat{\alpha}_k.r_k.\left(\sum_{\ell=0}^{N-1} \hat{\alpha}_\ell.r_k^*\right)$$

Le récepteur, ou démodulateur, déterminant la séquence de symboles $\hat{\alpha}_0,...,\hat{\alpha}_{N-1}$ maximisant cette quantité est dit optimum au sens du maximum de vraisemblance. En pratique, cette maximisation est d'une complexité croissante avec N (le nombre de calcul croît comme $2^N$) et pour N supérieur à 10 environ, on ne sait pas résoudre simplement cette expression.

On connaît plusieurs méthodes permettant d'obtenir un récepteur sous-optimum. On peut choisir une fenêtre d'observation composée d'un seul symbole (N=1). On obtient alors le récepteur non cohérent classique utilisé en particulier dans les modems basse vitesse qui observe le signal symbole par symbole.

On connaît aussi un récepteur non cohérent qui utilise une fenêtre d'observation de 2 symboles. Dans le cas d'une Modulation De Phase à deux états (MDP2), connu en terminologie anglosaxonne sous le nom de Phase Shift Keying (PSK), ce récepteur est le récepteur différentiel classique.

On connaît aussi un récepteur non cohérent qui utilise une fenêtre d'observation de 2P+1 symboles, où P est un nombre entier, pour déterminer le symbole central. Cette méthode, décrite dans l'article "Coherent and Noncoherent Detection of CPFSK" de W.P.OSBORNE et M.B.LUNTZ paru dans IEEE Transactions on Communications, vol. COM-22, n°8, août 1974, pp 1023-1036 conduit à un récepteur irréalisable car la fonction de vraisemblance ne s'exprime pas simplement en fonction de l'observation.

L'invention remédie aux défauts des récepteurs connus en utilisant une fonction approchée de la fonction de vraisemblance plus simple qui peut se maximiser de façon récursive. Cette méthode est particulièrement bien

adaptée aux transmissions de blocs de symboles de grande longueur (N = 64 par exemple). Le récepteur associé à ladite fonction a de très bonnes performances au sens du taux d'erreur.

L'invention consiste notamment à modifier la quantité à maximiser mentionnée plus haut de manière à trouver aisément une séquence $\hat{\alpha}_0,\ldots,\hat{\alpha}_{N-1}$ qui la maximise. En particulier on remplace la quantité à maximiser par la quantité $V(\hat{\alpha}_0,\ldots,\hat{\alpha}_{N-1})$ égale à

$$\mathrm{Re}\left(\sum_{k=0}^{N-1} \hat{\alpha}_k \cdot r_k \cdot \left(\sum_{\ell=1}^{L} \hat{\alpha}_{k-\ell} \cdot r_{k-\ell}\right)^{*}\right)$$

qui peut aussi s'écrire

$$\sum_{k=0}^{N-1} \hat{\alpha}_k \cdot \sum_{\ell=1}^{L} \hat{\alpha}_{k-\ell} \cdot \mathrm{Re}\,(r_k \cdot r_{k-\ell}^{*})$$

si les symboles $\hat{\alpha}_0,\ldots,\hat{\alpha}_{N-1}$ sont des nombres réels. Dans ces deux expressions, k-l reste compris entre 0 et N-1. La valeur de L est prédéterminée, elle est par exemple comprise entre 1 et 5.

Il est clair que la quantité à maximiser ayant été tronquée (on a remplacé

$$\sum_{\ell=0}^{N-1} \text{ par } \sum_{\ell=1}^{L}$$

), la séquence de symboles $\hat{\alpha}_0,\ldots,\hat{\alpha}_{N-1}$ maximisant la quantité simplifiée $V(\hat{\alpha}_0,\ldots,\hat{\alpha}_{N-1})$ n'est plus décidée de façon optimale mais sous-optimale. Cela signifie en particulier que le taux d'erreur du récepteur associé est plus élevé que le taux du récepteur théorique associé à l'expression non tronquée. Ce taux d'erreur varie avec L mais il tend asymptotiquement vers le récepteur optimum de l'expression générale lorsque L tend vers N. Il importe donc de choisir une valeur de L suffisamment grande pour avoir un taux d'erreur acceptable.

L'invention consiste également dans l'utilisation d'un algorithme récursif pour déterminer la séquence sous-optimale $\hat{\alpha}_0,\ldots,\hat{\alpha}_{N-1}$.

De manière plus précise, l'invention a pour objet un procédé de démodulation non cohérente d'un signal y(t) à énergie par symbole constante, ledit signal y(t) consistant en un signal x(t) auquel est superposé un bruit blanc gaussien b(t), ledit signal x(t) étant modulé linéairement par une séquence de symboles d'information $\alpha_0,\ldots,\alpha_{N-1}$ pris dans un alphabet α, où N est un nombre entier non nul, lesdits symboles étant émis à des dates successives séparées par un intervalle de temps T, ledit signal x(t) étant centré sur une fréquence porteuse $f_0$, dans lequel ledit procédé consiste à:

- traiter le signal y(t) pour obtenir N blocs de données $z_{k,k-l},\ldots,t_{k,k-l},\ldots,z_{k,k-L}$, où $1 \leq L < N$ et $0 \leq k \leq N-1$, ledit traitement consistant à filtrer ledit signal y(t) et à produire chaque donnée $z_{k,k-l}$ comme le produit de la valeur échantillonnée dudir signal filtré à la date t et de la valeur échantillonnée dudit signal filtré à la date t-lT,
- maximiser une quantité $V(\hat{\alpha}_0,\ldots,\hat{\alpha}_{N-1})$ où $\hat{\alpha}_0\ldots\hat{\alpha}_{N-1}$ est une séquence de symboles de l'alphabet α, ladite quantité étant égale à

$$\mathrm{Re}\left(\sum_{k=0}^{N-1} \hat{\alpha}_k \cdot \sum_{\ell=1}^{L} \hat{\alpha}_{k-\ell}^{*} \cdot z_{k,k-\ell}\right)$$

où Re signifie "partie réelle de"

et $\hat{\alpha}^{*}_{k-l}$ est le complexe conjugué de $\hat{\alpha}_{k-l}$

et dans laquelle l'indice k-l est compris entre 0 et N-1,

ladite maximisation étant obtenue par un algorithme récursif.

Selon une caractéristique secondaire du procédé selon l'invention, le traitement du signal y(t) comprend les actions successives suivantes:

- on extrait l'enveloppe complexe r(t) du signal y(t),
- on effectue un filtrage adapté du signal r(t),
- on échantillonne le signal filtré à N dates successives séparées par un intervalle de temps T obtenant ainsi des observations $r_0, r_2,\ldots,r_{N-1}$,
- on calcule les L données de chacun des N blocs de données $z_{k,k-l},\ldots,z_{k,k-L}$, chaque donnée $z_{k,k-l}$ étant égale à $r_k \cdot r_{k-l}^{*}$, où $r^{*}_{k-l}$ est le complexe conjugué de $r_{k-l}$.

Selon une autre caractéristique secondaire du procédé selon l'invention, dans lequel le signal modulé est du type à Déviation Minimale de Fréquence ou à Modulation de Phase à Deux Etats, le traitement du signal y(t) comprend les actions successives suivantes:

- on construit un signal z(t) en réalisant un filtrage passe-bande du signal y(t) autour de la fréquence porteuse $f_0$,
- on construit les signaux retardés z(t-T), z(t-2T), ..., z(t-LT),
- on construit les signaux $z(t)\cdot z(t\text{-}T)$, $z(t)\cdot z(t\text{-}2T)$, ..., $z(t)\cdot z(t\text{-}LT)$,
- on échantillonne ces signaux en même temps à des dates successives séparées par un intervalle de temps T obtenant ainsi au $k^{ième}$ échantillonnage un bloc de L données $z_{k,k-l}, ..., z_{k,k-L}$.

Selon une autre caractéristique secondaire du procédé de l'invention, l'algorithme récursif est l'algorithme de Viterbi.

Selon une autre caractéristique secondaire du procédé selon l'invention, on ne conserve à chaque date d'échantillonnage, qu'un sous-ensemble d'états au sens de l'algorithme de Viterbi.

Selon une autre caractéristique du procédé selon l'invention, on ne conserve à chaque date d'échantillonnage que l'état dont la métrique totale, au sens de l'algorithme de Viterbi, est la plus grande.

L'invention a aussi pour objet un démodulateur pour la mise en oeuvre du procédé selon l'invention comprenant en serie:

- un moyen de traitement recevant le signal y(t) et délivrant successivement les N blocs de L données $z_{k,k-l}$, $z_{k,k-2}$, ...$t_{k,k-l}$...$z_{k,k-L}$ où $0 \leqslant k \leqslant N\text{-}1$ et $1 \leqslant L < N$
- un moyen de calcul délivrant au vu des données desdits N blocs de données et selon un algorithme récursif, une séquence de symboles $\hat{\alpha}_0, ..., \hat{\alpha}_{N-1}$ maximisant la quantité $V(\hat{\alpha}_0, ..., \hat{\alpha}_{N-1})$.

Selon un mode de réalisation préféré du démodulateur selon l'invention, le moyen de traitement comprend, en série:

- un moyen oscillateur recevant en entrée le signal y(t) et délivrant en sortie au moins un signal décrivant l'enveloppe complexe r(t) du signal y(t),
- un filtre adapté,
- un moyen d'échantillonnage délivrant à N dates successives séparées par un intervalle de temps T des observations, ou échantillons, $r_0$, $r_1$..., $r_{N-1}$ du signal délivré par le filtre adapté,
- un moyen multiplicateur recevant lesdites observations et délivrant N blocs de L données $z_{k,k-l}$, $z_{k,k-2}$,..., $z_{k,k-L}$ où $0 \leqslant k \leqslant N\text{-}1$.

Selon un autre mode de réalisation avantageux du démodulateur selon l'invention, pour démoduler un signal y(t) du type à Déviation Minimale de Fréquence ou à Modulation de phase à Deux Etats, le moyen de traitement comprend:

- un filtre passe-bande de réception centré sur la fréquence $f_0$ et délivrant un signal z(t),
- L retardateurs en série délivrant chacun avec un retard T le signal appliqué sur leur entrée, le premier retardateur recevant le signal z(t),
- L multiplicateurs pour multiplier chacun le signal z(t) avec le signal délivré par l'un desdits L retardateurs,
- L filtres passe-bas de fréquence de coupure $f_0$, chacun relié à la sortie d'un desdits L multiplicateurs,
- un moyen d'échantillonnage recevant en parallèle sur L entrées les signaux issus desdits L filtres passe-bas et délivrant, à N dates successives séparées par un intervalle de temps T, un bloc de L données $z_{k,k-l}$, $z_{k,k-2}$,..., $z_{k,k-L}$ où $0 \leqslant k \leqslant N\text{-}1$.

Selon un mode de réalisation préféré du démodulateur selon l'invention, le moyen de calcul est apte à exécuter un algorithme de Viterbi.

D'autres caractéristiques et avantages de l'invention ressortiront mieux de la description qui va suivre, donnée à titre illustratif mais non limitatif, en référence aux dessins annexés dans lesquels:

- la figure 1, déjà décrite, représente de façon schématique une chaîne de modulation, transmission et démodulation de structure connue,
- la figure 2 représente un treillis utilisé dans le déroulement de l'algorithme de Viterbi employé dans le procédé de l'invention,
- la figure 3 représente un organigramme simplifié de l'algorithme de Viterbi employé dans le procédé de l'invention,
- la figure 4 illustre un premier mode de réalisation d'un démodulateur selon l'invention,
- la figure 5 illustre un second mode de réalisation d'un démodulateur selon l'invention, et
- la figure 6 est un diagramme illustrant les performances du procédé selon l'invention.

Le procédé de démodulation selon l'invention s'applique à tous les signaux modulés linéairement et à énergie par symbole constante, c'est-à-dire à tous les signaux dont l'enveloppe complexe est de la forme

$$\sum_{k=0}^{N-1} \alpha_k \cdot g(t-kT)$$

comme on l'a mentionné plus haut.

A titre d'exemple, on va décrire le procédé de démodulation d'un signal à modulation décalée. Cette modulation est un type particulier de modulation linéaire. L'enveloppe complexe $\alpha(t)$ d'un signal à modulation décalée a pour expression générale

$$\sum_{k=0}^{N_1} \left[ a_{21} \cdot g(t-2kT) + j.\ a_{2k+1} \cdot\ g(t-(2k+1)T) \right]$$

où $\int_{-\infty}^{+\infty}$ $(g(t))^2 \cdot dt = E_b$ (énergie par symbole constante) et $N_1$ est la partie entière de $\frac{1}{2}(N-1)$.

Une modulation à Déviation Minimale de Fréquence (en terminologie anglo-saxonne MSK pour "Minimum Shift Keying") est définie de plus par

$g(t) = \cos\frac{\pi t}{2T}$ pour $t \in [-T,T]$

$\alpha_m = (-1)^{m-1} \cdot \alpha_{m-1} \cdot a_{m-1}$ pour m tel que $1 \leqslant m \leqslant N-1$

et $\alpha_0 = 1$ par exemple

et par $\alpha \in [-1,1]$.

Cette modulation peut aussi s'exprimer sous la forme d'une modulation de Fréquence à Phase Continue où $\alpha(t)$ s'exprime par

$\alpha(t) = e^{j(a_n \cdot \frac{\pi t}{2T} + \Theta_n)}$

où $t \in [nT, (n+1)T]$ et $\Theta$ est définie par la relation de récurrence $\Theta_n = \Theta_{n-1} + a_{n-1} \cdot \frac{\pi}{2}$.

Avec les observations suivantes,

$$r_{2k} = \int_{-\infty}^{+\infty} r^{*}(t) . g(t-2kT) . dt$$

et

$$r_{2k+1} = -j \int_{-\infty}^{+\infty} r^{*}(t) . g(t-(2k+1)T) . dt,$$

la quantité $V(\hat{\alpha}_0, \ldots, \hat{\alpha}_{N-1})$ s'écrit

$$\sum_{k=0}^{N-1} \hat{\alpha}_k \cdot \sum_{\ell=1}^{L} \hat{\alpha}_{k-\ell} \cdot \mathrm{Re}(r_k \cdot r^{*}_{k-\ell})$$

Cette quantité peut être maximisée par un algorithme récursif. En effet, si on note

$$L_K = \sum_{k=0}^{K} \hat{\alpha}_k \cdot \sum_{\ell=1}^{L} \hat{\alpha}_{k-\ell} \cdot \mathrm{Re}\left(r_k \cdot r^{*}_{k-\ell}\right)$$

on peut écrire $L_K = L_{K-1} + m(\hat{\alpha}_K, \hat{S}_{K-1}, r_K, \ldots, r_{K-l})$ en posant

$m(\hat{\alpha}_K, \hat{S}_{K-l}, r_K, \ldots, r_{K-L})$

$$= \hat{\alpha}_K \cdot \sum_{\ell=1}^{L} \hat{\alpha}_{K-\ell} \cdot \mathrm{Re}(r_K \cdot r^{*}_{K-\ell})$$

où $\hat{S}_{K-l}$ est appelé état à la date K-l et correspond au L-uplet $(\hat{\alpha}_{K-l}, \ldots, \hat{\alpha}_{K-L})$ et où $m(\hat{\alpha}_K, \hat{S}_{K-l}, r_K, \ldots, r_{K-L})$ est appelée métrique de branche entre les états $\hat{S}_{K-l}$ et $\hat{S}_K$.

L'expression de $L_K$ en fonction de $L_{K-l}$ montre que la connaissance de l'état $\hat{S}_K$ est possible à partir de $\hat{S}_{K-l}$. On peut donc maximiser $V(\hat{\alpha}_0, \ldots, \hat{\alpha}_{N-1})$ par un algorithme récursif. Le procédé de l'invention utilise avantageusement l'algorithme de Viterbi qui va maintenant être décrit succinctement. Une présentation plus

complète de cet algorithme est effectuée dans l'article "The Viterbi Algorithm" par G. David Forney, Jr, paru dans Proceedings of the IEEE, vol 61, n°3, mars 1973, pp 268-278.

On a représenté sur la figure 2 un treillis illustrant le déroulement de l'algorithme de Viterbi. De manière générale, ce treillis est à $n(\alpha)^L$ états où $n(\alpha)$ est le nombre d'éléments de l'alphabet $\alpha$. Dans le cas particulier décrit, $\alpha = \{-1, 1\}$ et donc $n(\alpha) = 2$. De plus, on prend à titre d'exemple $L = 2$. Ce treillis a donc quatre états possibles $S_1$, $S_2$, $S_3$ et $S_4$ à chaque date K-1, K, K+1,...

Sur cette figure, les transitions en pointillé correspondent au symbole -1 de l'alphabet $\alpha$ et celles en trait plein correspondent au symbole +1 de l'alphabet $\alpha$. Plus précisément, le trait référencé 26 correspond à $\hat{\alpha}_{K-1} = 1$ et l'état référencé 28 est $\hat{S}_K$. Il est égal à $(\hat{\alpha}_{K-2}, \hat{\alpha}_{K-l})$ c'est-à-dire à $\hat{S}_1 = (-1,-1)$. A chaque transition entre un état à une date donnée et l'état à la date suivante correspond une métrique de branche m. Cette métrique est d'autant plus élevée que la transition correspondante est plus vraisemblable. L'algorithme de Viterbi consiste à choisir dans le treillis un chemin, c'est-à-dire une succession d'états, tel que la métrique totale, égale à la somme des métriques de branche reliant deux états successifs dudit chemin, est maximale. Un seul chemin arrivant à chaque état est conservé. Le chemin associé à chaque état est aussi appelé le survivant et peut être représenté simplement par l'ensemble des symboles successifs qui le constituent.

On va maintenant décrire un organigramme simplifié de l'argorithme de Viterbi. La première étape 30 est une étape d'initialisation des métriques, des survivants et de l'indice K de récursivité. L'étape 32 suivante consiste à échantillonner le signal r(t) filtré. Cet échantillonnage se fait à la date K.T.

Les étapes 34 et 36 réalisent le calcul des métriques de branche entre les dates K-1 et K. L'étape 34 consiste à calculer les termes $z_{K,K-l},\ldots,z_{K,K-L}$ égaux respectivement à $Re(r_K \cdot r^*_{K-l},\ldots,$ $Re(r_K \cdot r^*_{K-L})$ qui apparaissent dans l'expression des métriques de branche. Ces calculs effectués, l'étape 36 calcule les métriques de branche reliant chacun des états à la date K-1 à chacun des états à la date K.

L'étape 36 effectue ensuite un choix entre les $n(\alpha)$ métriques totales atteignant chaque état à la date K. Pour chaque état, la plus grande de ces métriques est conservée. Le chemin dont la métrique est la plus grande, appelé le survivant, est lui aussi conservé.

Dans l'étape 40, on décide le symbole $\hat{\alpha}_{K-D}$ c'est-à-dire que l'on attribue une valeur de l'alphabet $\alpha$ au symbole $\hat{\alpha}_{K-D}$, où D est un nombre entier appelé retard de décision. Cette décision est faite en fonction des résultats de l'étape 38. De manière plus précise, on choisit à la date K le survivant parmi les $n(\alpha)^L$ survivants qui a la métrique la plus grande. Ce survivant est une séquence de symboles..., $\hat{\alpha}_{K-D},\ldots, \hat{\alpha}_{K-L},\ldots, \hat{\alpha}_{K-l}, \hat{\alpha}_K$. On attribue au symbole $\hat{\alpha}_{K-D}$ la valeur du symbole correspondant dans le survivant choisi.

Dans l'étape 42, on teste si l'algorithme est terminé. C'est la cas si K est égal à N. Si K est inférieur à N, on incrémente K et on reprend les étapes 32, 34, 36, 38 et 40.

Les étapes 34 et 36 peuvent demander des calculs importants si le nombre $n(\alpha)$ d'éléments de l'alphabet $\alpha$ ou le nombre L est grand. Il est possible de réduire la complexité pratique de l'algorithme en ne conservant, à chaque date K qu'un sous-ensemble des états du treillis au lieu de les conserver tous.

Les états conservés peuvent par exemple être ceux dont la distance, au sens de Hamming, à l'état correspondant à la plus grande métrique totale est inférieure à une valeur prédéterminée d. Cette distance connue est égale à la somme des symboles différents entre deux états. Par exemple, la distance de Hamming entre les états $S_1$ et $S_2$ de la figure 2 est égale à 1 et la distance entre les états $S_2$ et $S_3$ est égale à 2.

Dans un autre mode de réalisation de l'algorithme, on peut ne conserver à chaque date K qu'un seul survivant. Cette procédure connue est dite à "décision dans la boucle".

Le procédé de démodulation de l'invention est mis en oeuvre dans un démodulateur dont un premier mode de réalisation est représenté sur la figure 4. Ce démodulateur comprend un moyen de traitement 13, un moyen de calcul 54 et un moyen de décodage 24. Le moyen de traitement 13 comprend un oscillateur 14 et un déphaseur 16 délivrant ainsi deux signaux $2 \cdot \cos(w_0t + \Theta(t)$ et $-2 \cdot \sin(w_0t + \Theta(t))$. Ces signaux sont modulés par le signal y(t) et on obtient en sortie les signaux Re(r(t)) et Im(r(t)) où le signal r(t) est l'enveloppe complexe du signal y(t). Les signaux sont appliqués sur l'entrée d'un filtre 18 de réponse impulsionnelle $g(t_0-t)$, où $t_0$ caractérise la durée de la transmission et g(t) est la réponse impulsionnelle des filtres d'émission du modulateur délivrant le signal émis x(t). Un moyen d'échantillonnage 20, en série avec le filtre 18, commuté à N dates séparées par un intervalle de temps T délivre les couples de données $Re(r_k)$ et $Im(r_k)$ où $0 \leqslant k \leqslant N-1$. Un moyen multiplicateur reçoit ces couples de données et délivre les blocs de L données $z_{k,k-l},\ldots, z_{k,k-L}$ où $0 \leqslant k \leqslant N-1$ qui sont reçues par le moyen de calcul 54. Ce moyen de calcul 54 est apte à mettre en oeuvre l'algorithme de Viterbi. Ce moyen de calcul 54 peut notamment être un processeur de traitement de signal contenant un microprogramme apte à exécuter l'algorithme de Viterbi. A titre d'exemple on peut utiliser des processeurs tels que µPTS du C.N.E.T, TMS 320 de Texas Instruments ou NEC 7720 de National Semiconducteur.

Le démodulateur peut enfin comprendre un moyen de décodage 24 recevant la séquence de symboles $\hat{\alpha}_0,\ldots,$ $\hat{\alpha}_{N-1}$ délivrée par le moyen de calcul 54 et délivrant la séquence de symboles $\hat{a}_0\ldots, \hat{a}_{N-1}$ éléments de l'alphabet A si, à la modulation, le codage inverse a été employé.

Le démodulateur selon l'invention décrit en référence à la figure 4 a une structure générale permettant de traiter tous les signaux modulés linéairement. Dans certains types de modulations linéaries, on peut concevoir un démodulateur plus simple. On va décrire, en référence à la figure 5 un démodulateur pour signaux du type à modulation décalée à Deviation Minimale de Fréquence (DMF).

Le démodulateur comprend un moyen de traitement 13 recevant le signal y(t) et délivrant les blocs de L données $z_{k,k-l},\ldots, z_{k,k-L}$ où $0 \leqslant k \leqslant N-1$, un moyen de calcul 54 et un moyen de décodage 24. Ces deux derniers moyens identiques à ceux utilisés dans le démodulateur décrit en référence à la figure 4, ne seront pas repris.

Le moyen de traitement 13 comprend un filtre passe-bande 44 centré autour de la fréquence $f_0$ qui délivre un signal z(t). Il comprend ensuite L retardateurs $46_1$,...,$46_L$ en série, le premier retardateur $46_1$ recevant z(t). Chacun de ces retardateurs retarde le signal appliqué sur son entrée d'un temps T. Dans le cas décrit d'un signal à modulation décalée du type DMF, ce retard T est lié à la pulsation $w_0$, où $w_0=2\pi f_0$ par $w_0 \cdot T=\frac{\pi}{2}+2p\pi$ où p est un nombre entier. Le signal délivré par chaque retardateur est modulé par le signal z(t) dans des multiplicateurs $48_l$,..., $48_L$. En sortie de chacun de ces derniers, est relié un filtre passe-bas $50_l$,..., $50_L$ de fréquence de coupure $f_0$. Un moyen d'échantillonnage 52 à L entrées reçoit en parallèle les signaux issus desdits filtres passe-bas. Il délivre à N dates successives séparées par un intervalle de temps T un bloc de L données $z_{k,k-l}$, $z_{k,k-2}$,..., $z_{k,k-L}$ où $0 \leqslant k \leqslant N-1$. Les données sont ensuite appliquées sur L entrées du moyen de calcul 54.

On peut noter que le modulateur décrit peut être utilisé pour des signaux à Modulation De Phase à 2 états (MDP2). Il suffit de remplacer le retard T de chacun des retardateurs par un retard T' vérifiant $w_0 \cdot T'=2p\pi$ où p est un nombre entier.

On a représenté sur la figure 6 un diagramme illustrant les performances du procédé de démodulation selon l'invention. En abscisse est porté le rapport de l'énergie par élément binaire (Eb) à la densité spectrale monolatérale $N_0$ sur la voie de transmission. Cette quantité se mesure en watt/hertz. En ordonnée, sur un axe semi-logarithmique, est porté le taux d'erreur à la réception.

Les courbes représentées sont les courbes de performance de démodulation d'un signal modulé linéairement et à Déviation Minimale de Fréquence. La démodulation non-cohérente a été réalisée par un récepteur utilisant l'algorithme de Viterbi.

La courbe $C_{Th}$ correspond au récepteur cohérent théorique. C'est la courbe optimale. La courbe suivante C correspond à un récepteur cohérent simulé par la même chaîne de transmission et les courbes $NC_1$, ..., $NC_5$ correspondent à divers récepteurs non-cohérents selon l'invention. L'indice de chaque courbe NC représente la valeur de la variable L. On remarque qu'avec une valeur de L égale à 5, on obtient un récepteur non cohérent dont les performances s'approchent d'un récepteur cohérent classique.

## Revendications

1. Procédé de démodulation non cohérente d'un signal y(t) à énergie par symbole constante, ledit signal y(t) consistant en un signal x(t) auquel est superposé un bruit blanc gaussien b(t), ledit signal x(t) étant modulé linéairement par une séquence de symboles d'information $\alpha_0$,..., $\alpha_{N-1}$ pris dans un alphabet $\alpha$, où N est un nombre entier non nul, lesdits symboles étant émis à des dates successives séparées par un intervalle de temps T, ledit signal x(t) étant centré sur une fréquence porteuse $f_0$, ledit procédé étant caractérisé en ce que:

- on traite le signal y(t) pour obtenir N blocs de données $z_{k,k-1}$,..., $z_{k,k-l}$,..., $z_{k,k-L}$, où $1 \leqslant L < N$ et $0 \leqslant k \leqslant N-1$, ledtit tratement consistant à filtrer ledit signal y(t) et à produire chaque donnée $z_{k,k-l}$ comme le produit de la valeur échantillonnée dudit signal filtré à la date t et de la valeur échantillonnée dudit signal filtré à la date t-lT,
- on maximise une quantité $V(\hat{\alpha}_0,...,\hat{\alpha}_{N-1})$ où $\hat{\alpha}_0$,..., $\hat{\alpha}_{N-1}$ est une séquence de symboles de l'alphabet $\alpha$, ladite quantité étant égale à

$$\mathrm{Re}\left(\sum_{k=0}^{N-1} \hat{\alpha}_k \cdot \sum_{\ell=1}^{L} \hat{\alpha}^*_{k-\ell} \cdot z_{k,k-\ell}\right) .$$

où Re signifie "partie réelle de"
et $\hat{\alpha}^*_{k-l}$ est le complexe conjugué de $\hat{\alpha}_{k-l}$
et dans laquelle l'indicie k-l est compris entre 0 et N-1,
ladite maximisation étant obtenue par un algorithme récursif.

2. Procédé selon la revendication 1, caractérisé en ce que le traitement du signal y(t) comprend les actions successives suivantes:

- on extrait l'enveloppe complexe r(t) du signal y(t),
- on effecture un filtragee adapté du signal r(t),
- on échantillonne le signal filtré à N dates successives séparées par un intervalle de temps T obtenant ainsi des obsérvations $r_0$, $r_2$,..., $r_{N-1}$,
- on calcule les L données de chacun des N blocs de données $z_{k,k-1}$,..., $z_{k,k-L}$, chaque donnée $z_{k,k-l}$ étant égale à $r_k \cdot r^*_{k-l}$, où $r^*_{k-l}$ est le complexe conjugué de $r_{k-l}$.

3. Procéde selon la revendication 1, dans lequel le signal modulé est du type à Deviation Minimale de Fréquence ou à Modulation de Phase à Deux Etats, caractérisé en ce que le traitement du signal y(t) comprend les actions successives suivantes:

- on construit un signal z(t) en réalisiant un filtrage passe-bande du signal y(t) autour de la fréquence porteuse $f_0$;

- on construit les signaux retardés $z(t-T)$, $z(t-2T)$, ..., $z(t-L.T)$,
- on construit les signaux $z(t) \cdot z(t-T)$, $z(t) \cdot z(t-2T)$, ...., $z(t) \cdot z(t-L \cdot T)$,
- on échantillonne ces singaux en même temps à N dates successives séparées par un intervalle de temps T obtenant ainsi au $k^{ième}$ échantillonnage un bloc de L données $z_{k,k-1}$, ..., $z_{k,k-L}$.

4. Procédé selon l'une quelconque des revendications 1 à 3 caractérisé en ce que l'algorithme récursif est l'algorithme de Viterbi.

5. Procédé sélon la revendication 4, caractérisé en ce qu'on ne conserve à chaqué date d'échantillonnage, qu'un sous-ensemble d'états au sens de l'algorithme de Viterbi.

6. Procédé selon la révendication 3, caractérisé en ce qu'on ne conserve à chaque date d'échantillonnage que l'état dont la métrique totale, au sens de l'algorithme de Viterbi, est la plus grande.

7. Démodulateur pour la mise en oeuvre du procédé selon la revendication 1, caractérisé en ce qu'il comprend en série:
- un moyen de traitement (13) recevant le signal y(t) et délivrant successivement les N blocs de L données $z_{k,k-1}$, $z_{k,k-2}$, ..., $z_{k,k-l}$,...$z_{k,k-L}$ où $0 \leqslant k \leqslant N-1$ et $1 \leqslant L < N$
- un moyen de calcul (54) délivrant eu vu des données desdits N blocs de données et selon un algorithme récursif, une séquence de symboles $\hat{\alpha}_0, \ldots, \hat{\alpha}_{N-1}$ maximisant la quantité $V(\hat{\alpha}_0, \ldots, \hat{\alpha}_{N-1})$.

8. Démodulateur selon la revendication 7, caractérisé en ce que le moyen de traitement (13) comprend, en série:
- un moyen oscillateur (14, 16) recevant en entrée le signal y(t) et délivrant en sortie au moins un signal décrivant l'enveloppe complexe r(t) du signal y(t),
- un filtre adapté (18),
- un moyen d'échantillonnage (20) délivrant à N dates successives séparées par un intervalle de temps T des observations, ou échantillons, $r_0$, $r_1$,..., $r_{N-1}$ du signal délivré par le filtre adapté (18),
- un moyen multiplicateur (21) recevant lesdits observations et délivrant N blocs de L données $z_{k,k-1}$, $z_{k,k-2}$, ..., $z_{k,k-L}$ où $0 \leqslant k \leqslant CN-1$.

9. Démodulateur selon la revendication 7, pour démoduler un signal y(t) du type à Déviation Minimale de Fréquence ou à Modulation de Phase à Deux Etats, caractérisé en ce que le moyen de traitement (13) comprend:
- un filtre passe-bande de réception (44) centré sur la fréquence $f_0$ et délivrant un signal z(t),
- L retardateurs ($46_1$,..,$46_L$) en série délivrant chacun avec un retard T le signal appliqué sur leur entrée, le premier retardateur ($46_1$) recevant le signal z(t),
- L multiplicateurs ($46_1$,..,$46_L$) pour multiplier chacun le signal z(t) avec le signal délivré par l'un desdits L retardateurs,
- L filtres passe-bas ($50_1$,....,$50_L$) de fréquence de coupure $f_0$, chacun relié à la sortie d'un desdits L multiplicateurs,
- un moyen d'échantillonnage (52) recevant en parallèle sur L entrées les signaux issus desdits L filtres passe-bas et délivrant, à N dates successives séparées par un intervalle de temps T, un bloc de L données $z_{k,k-1}$, $z_{k,k-2}$, ..., $z_{k,k-l}$ où $0 \leqslant k \leqslant N-1$.

10. Démodulatéur selon l'une quelconque des revendications 7 à 9 caractérisé en ce que le moyen de calcul (54) est apte à exécuter un algorithme de Viterbi.

**Patentansprüche**

1. Verfahren zur nicht-kohärenten Demodulation eines Signals y(t) mit konstanter Symbolansteuerung, wobei das genannte Signal y(t) aus einem Signal x(t) besteht, dem ein gauss'sches weißes Rauschen b(t) überlagert ist, wobei das Signal x(t) durch eine Reihe von einem Alphabet $\alpha$ entnommenen Informationssymbolen $\alpha_0, \ldots, \alpha_{N-1}$ linear moduliert ist, wobei N eine ganze, von Null verschiedene Zahl ist und die genannten Symbole zu aufeinanderfolgenden, durch ein Zeitintervall T getrennte Daten ausgegeben wird und das genannte Signal x(t) zu einer Trägerfrequenz $f_0$ zentriert ist, wobei das Verfahren dadurch gekennzeichnet ist, daß:
- man das Signal y(t) verarbeitet, um N Blöcke von Werten $z_{k,k-1}$, ..., $z_{k,k-l}$, ...$z_{k,k-L}$ mit $1 \leqslant L < N$ und $0 \leqslant k \leqslant N-1$ zu erhalten, wobei die gennante Verarbeitung darin besteht, das genannte Signal y(t) zu filtern und jeden Wert $z_{k,k-l}$ als das Produkt aus dem Abtastwert des gefilterten Signals zum Zeitpunkt t und dem Abtastwert des genannten gefilterten Signals zum Zeitpunkt t-lT,
- man eine Größe $V(\hat{\alpha}_0, \ldots, \hat{\alpha}_{N-1})$ maximiert, wobei $\hat{\alpha}_0, \ldots, \hat{\alpha}_{N-1}$ eine Symbolreihe des Alphabets $\alpha$ und die gennante Größe gleich ist

$$\mathrm{Re}\left(\sum_{k=0}^{N-1} \hat{\alpha}_k \cdot \sum_{\ell=1}^{L} \hat{\alpha}^*_{k-\ell} \cdot z_{k,k-\ell}\right)$$

worin Re den "Realteil von" bedeutet

und $\hat{\alpha}^*_{k-l}$ das Komplexkonjugierte von $\hat{\alpha}_{k-l}$ ist und wobei der Index k-l zwischen 0 und N-1 liegt, wobei die genannte Maximierung mittels eines rekursiven Algorithmus erhalten wird.

2. Verfahren nach Anspruch 1,
dadurch gekennzeichnet,
daß die Verarbeitung des Signals y(t) die folgenden, aufeinanderfolgenden Maßnahmen umfaßt:
- man gewinnt die komplexe Einhüllende r(t) des Signals y(t),
- man führt eine angepaßte Filterung des Signals r(t) durch,
- man tastet das gefilterte Signal zu N aufeinanderfolgenden, durch ein Zeitintervall T getrennten Zeitpunkten ab, wobei man somit die Beobachtungen $r_0, r_1, ..., r_{N-1}$ macht,
- man berechnet die L Werte von jedem der N Blöcke der Werte $z_{k,k-1}, ..., z_{k,k-L}$, wobei jeder Werte $z_{k,k-l}$ gleich $r_k \cdot r^*_{k-l}$ ist, mit $r^*_{k-l}$ dem Komplexkonjugierten von $r_{k-l}$.

3. Verfahren nach Anspruch 1, bei dem das modulierte Signal von der Art minimaler Frequenzabweichung oder Phasenmodulation mit zwei Zuständen ist,
dadurch gekennzeichnet,
daß die Verarbeitung des Signals y(t) die folgenden, aufeinanderfolgenden Maßnahmen umfaßt:
- man bildet ein Signal z(t), in dem man eine Bandpassfilterung des Signals y(t) um die Trägerfrequenz $f_0$ herstellt,
- man bildet die verzögerten Signale z(t-T), z(t-2T),..., z(t-L·T),
- man bildet die Signale z(t) z(t-T), z(t) z(t-2T),..., z(t) z(t-L·T),
- man tastet diese Signale gleichzeitig zu N aufeinanderfolgenden, durch ein Zeitintervall T getrennten Zeitpunkten ab, wobei man somit bei der k-ten Abtastung einen Block von L Werten $z_{k,k-1}, ... z_{k,k-L}$ erhält.

4. Verfahren nach irgendeinem der Ansprüche 1 bis 3,
dadurch gekennzeichnet,
daß der rekursive Algorithmus ein Viterbi-Algorithmus ist.

5. Verfahren nach Anspruch 4,
dadurch gekennzeichnet,
daß man zu jedem Abtastzeitpunkt nur eine Untermenge von Zuständen im Sinn des Viterbi-Algorithmus bewahrt.

6. Verfahren nach Anspruch 5,
dadurch gekennzeichnet,
daß man zu jedem Abtastzeitpunkt nur den Zustand bewahrt, dessen Gesamtmetrik im Sinne des Viterbi-Algorithmus die größte ist.

7. Demodulator zur Durchführung des Verfahrens nach Anspruch 1,
dadurch gekennzeichnet,
daß er in Reihe umfaßt:
- eine Verarbeitungseinrichtung (13), die das Signal y(t) erhält und aufeinanderfolgend die N Blöcke von L Werten $z_{k,k-1}, z_{k,k-2}, ..., z_{k,k-l}, ..., z_{k,k-L}$ mit $0 \leqslant k < N-1$ und $1 \leqslant L < n$ abgibt,
- eine Recheneinrichtung (54) die im Hinblick der Werte der genannten N Blöcke von Werten und gemäß einem rekursiven Algorithmus eine Reihe von Symbolen $\hat{\alpha}_0, ..., \hat{\alpha}_{N-1}$ abgibt, die die Größe $V(\hat{\alpha}_0, ..., \hat{\alpha}_{N-1})$ maximiert.

8. Demodulator nach Anspruch 7,
dadurch gekennzeichnet,
daß die Verarbeitungseinrichtung (13) in Reihe umfaßt:
- eine Oszillatoreinrichtung (14, 16), die am Eingang das Signal y(t) erhält und am Ausgang wenigstens ein Signal abgibt, welches die komplexe Umhüllende r(t) des Signals y(t) beschreibt,
- ein angepaßtes Filter (18),
- eine Abtasteinrichtung (20), welche zu N aufeinanderfolgenden, durch ein Zeitintervall T getrennten Zeitpunkten die Beobachtungen oder Abtastungen $r_0, r_1, ..., r_{N-1}$ des von dem angepaßten Filter (18) gelieferten Signals abgibt,
- eine Multiplikationseinrichtung (21), die die genannten Beobachtungen erhält und N Blöcke von L Werten $z_{k,k-1}, z_{k,k-2}, ..., z_{k,k-L}$ mit $0 \leqslant k \leqslant N-1$ abgibt.

9. Demodulator nach Anspruch 7 zum Demodulieren eines Signals y(t) vom Typ minimaler Frequenzabweichung oder Phasenmodulation mit zwei Zuständen,
dadurch gekennzeichnet,
daß die Verarbeitungseinrichtung (13) umfaßt:
- ein Empfangsbandfilter (44), welches zu der Frequenz $f_0$ zentriert ist und ein Signal z(t) abgibt,
- L Verzögerungsglieder ($46_1, ..., 46_L$) in Reihe, von denen jedes das an ihren Eingang angelegte Signal mit einer Verzögerung T abgibt, wobei das erste Verzögerungsglied ($46_1$) das Signal z(t) erhält,
- L Multiplikationseinrichtungen ($48_1, ..., 48_L$) zur Multiplikation eines jeden Signals z(t) mit dem von einem der L Verzögerungsglieder gelieferten Signal,
- L Tiefpassfilter ($50_1, ..., 50_L$) mit der Abschneidefrequenz $f_0$, von denen jedes mit dem Ausgang einer der genannten L Multiplikationseinrichtungen verbunden ist,
- einer Abtasteinrichtung (52), die parallel an L Eingängen, die von den genannten L Tiefpassfiltern abgegebenen Signale erhält und zu N aufeinanderfolgenden, durch ein Zeitintervall T getrennten Zeitpunkten einen Block von L Werten $z_{k,k-1}, z_{k,k-2}, ..., z_{k,k-1}$ mit $0 \leqslant k \leqslant N-1$ abgibt.

10. Demodulator nach irgendeinem der Ansprüche 7 bis 9,
dadurch gekennzeichnet,
daß die Recheneinrichtung (54) geeignet ist, einen Viterbi-Algorithmus durchzuführen.

**Claims**

1. Process for the noncoherent demodulation of a signal y(t) with energy by constant symbol, said signal y(t) consisting of a signal x(t) on which is superimposed a Gaussian white noise b(t), said signal x(t) being linearly modulated by a sequence of information symbols $\alpha_0,...,\alpha_{N-1}$ taken from an alphabet $\alpha$, in which N is a non-zero integer, said symbols being emitted at successive dates separated by a time interval T, said signal x(t) being centred on a carrier frequency $f_0$, characterized in that the process comprises processing the signal y(t) to obtain N data blocks, $z_{k,k-1},...,z_{k,k-L}$, in which L is a non-zero integer and $0 \leqslant k \leqslant N-1$, said processing consisting of filtering said signal y(t) and producing each data item $z_{k,k-l}$ as the product of the sampled value of said filtered signal at date t and the sampled value of said filtered signal at date t-lT maximizing a quantity $V(\hat{\alpha}_0,...,\hat{\alpha}_{N-1})$ in which $\hat{\alpha}_0..., \hat{\alpha}_{N-1}$ is a sequence of symbols of the alphabet $\alpha$, said quantity being equal to

$$Re\left( \sum_{k=0}^{N-1} \alpha_k \cdot \sum_{\ell=1}^{L} \hat{\alpha}^*_{k-\ell} \cdot z_{k,k-\ell} \right)$$

in which Re signifies "real part of" and $\hat{\alpha}_{K-l}$ is the conjugate complex of $\hat{\alpha}_{k-l}$, and which the index k-l is between 0 and N-1, said maximization being obtained by a recursive algorithm.

2. Process according to claim 1, characterized in that the processing of the signal y(t) comprises the following successive actions:
- the complex envelope r(t) of the signal y(t) is extracted,
- there is a matched filtering of the signal r(t),
- the filtered signal is sampled at N successive dates separated by a time interval T so that the observations $r_0, r_2,..., r_{N-1}$ are obtained,
- the L data on each of the N data blocks $z_{k,k-1},..., z_{k,k-L}$ are calculated each data item $z_{k,k-l}$ being equal to $r_k \cdot r_{k-L}$ is conjugated complex of $r_{k-L}$.

3. Process according to claim 1, in which the modulated signal is of the minimum shift keying or phase shift keying type, characterized in that the processing of the signal y(t) comprises the following successive actions:
- a signal z(t) is produced by carrying out a pass band filtering of the signal y(t) about the carrier frequency $f_0$,
- the delayed signals z(t-T), z(t-2T),..., z(t-Lt) are produced,
- the signals $z(t) \cdot z(t-T)$, $z(t) \cdot z(t-2T)$,..., $z(t) \cdot z(t-LT)$ are produced,
- these signals are sampled at the same time at successive dates separated by a time interval T, so that at the kth sampling a block of L data $z_{k,k-l},..., z_{k,k-L}$ is obtained.

4. Process according to any one of the claims 1 to 3, characterized in that the recursive algorithm is the Viterbi algorithm.

5. Process according to claim 4, characterized in that only one subset of states in the sense of the Viterbi algorithm is retained at each sampling date.

6. Process according to claim 5, characterized in that only the state whose total metric, in the sense of the Viterbi algorithm is largest is retained at each sampling date.

7. Demodulator for performing the process according to claim 1, characterized in that it comprises in series:
- a processing means (13) receiving the signal y(t) and successively supplying N blocks of L data $z_{k,k-1}, z_{k,k-2},..., z_{k,k-L}$, in which $0 \leqslant k \leqslant N-1$ and $1 \leqslant L \leqslant N$,
- a calculating means (54) supplying in view of the data of said N data blocks and in accordance with a recursive algorithm, a sequence of symbols $\hat{\alpha}_0,..., \hat{\alpha}_{N-1}$ maximizing the quantity $V(\hat{\alpha}_0,...,\hat{\alpha}_{N-1})$.

8. Demodulator according to claim 7, characterized in that the processing means (13) comprises in series:
- an oscillator means (14, 16) receiving at the input the signal y(t) and supplying at the output at least one signal describing the complex envelope r(t) of the signal y(t),
- a matched filter (18),
- a sampling means (20) supplying observations or samples $r_0, r_1, ..., r_{N-1}$ of the signal delivered by matched filter (18) at N successive dates separated by time interval T,
- a multiplier means (21) receiving said observations and supplying N blocks of L data $z_{k,k-1}, z_{k,k-2}, ..., z_{k,k-L}$ in which $0 \leqslant k \leqslant N-1$.

9. Demodulator according to claim 7 for demodulating a signal y(t) of the minimum shift keying or phase shift keying type, characterized in that the processing means (13) comprises:
- a reception band pass filter (44) centred on the frequency $f_0$ and supplying a signal z(t),

- L delay means ($46_1$.....$46_L$) in series, each supplying with a delay T the signal applied to their input, the first delay means ($46_1$) receiving the signal z(t),

- L multipliers ($48_1$.....$48_L$) each for multiplying the signal z(t) by the signal supplied by one of the said L delay means,

- L low pass filters ($50_1$.....$50_L$) of cut-off frequency $f_0$ each being connected to the output of one of the said L multipliers,

- a sampling means (52) receiving in parallel on L inputs, the signals from said L low pass filters and supplying, at N successive dates separated by a time interval T, a block of L data $z_{k,k-1}$, $z_{k,k-2}$, ..., $z_{k,k-L}$ in which $0 \leqslant k \leqslant N-1$.

10. Demodulator according to any one of the claims 7 to 9, characterized in that the calculating means (54) is able to realize a Viterbi algorithm.

FIG.1

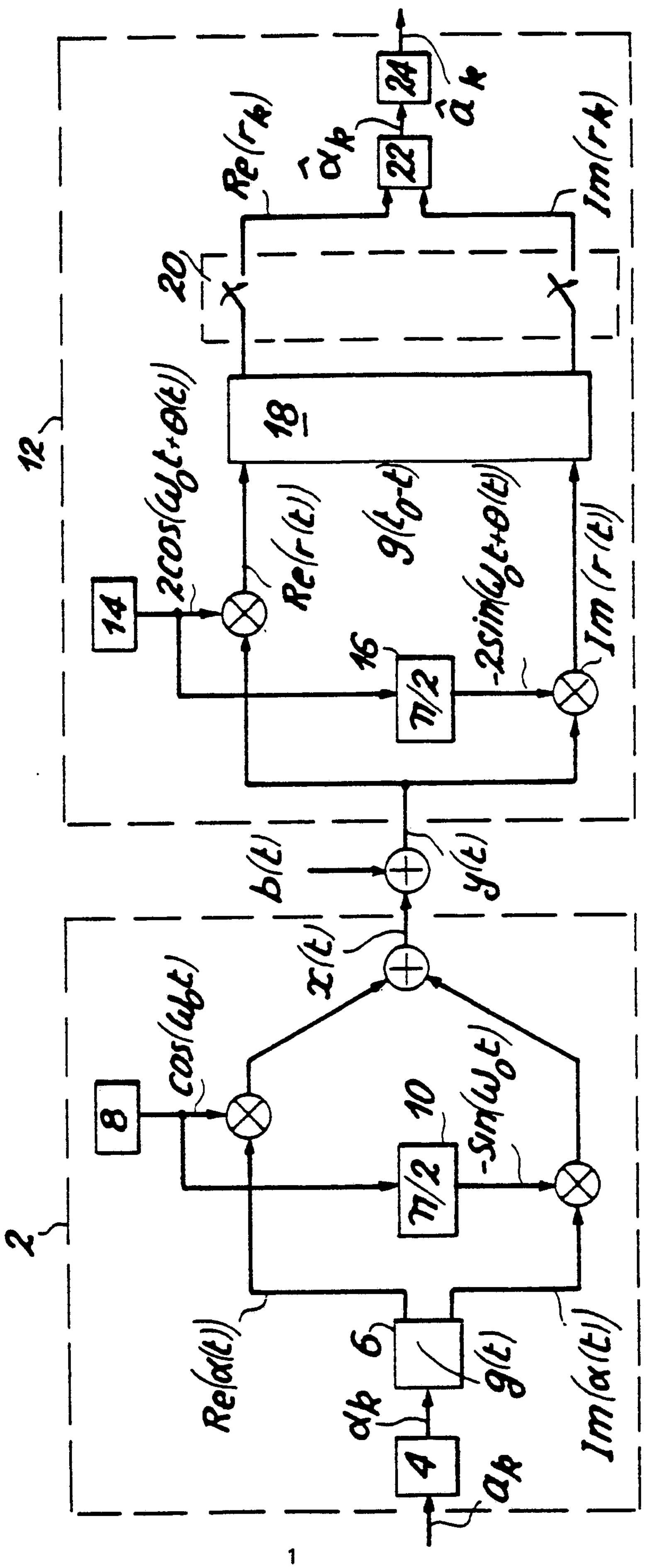
2
4
6
8
10
12
14
16
18
20
22
24
$a_k$
$\alpha_k$
$g(t)$
$Re(\alpha(t))$
$Im(\alpha(t))$
$\pi/2$
$\cos(\omega_0 t)$
$-\sin(\omega_0 t)$
$x(t)$
$b(t)$
$y(t)$
$2\cos(\omega_0 t+\theta(t))$
$-2\sin(\omega_0 t+\theta(t))$
$Re(r(t))$
$Im(r(t))$
$g(t_0-t)$
$Re(r_k)$
$Im(r_k)$
$\hat{\alpha}_k$
$\hat{a}_k$

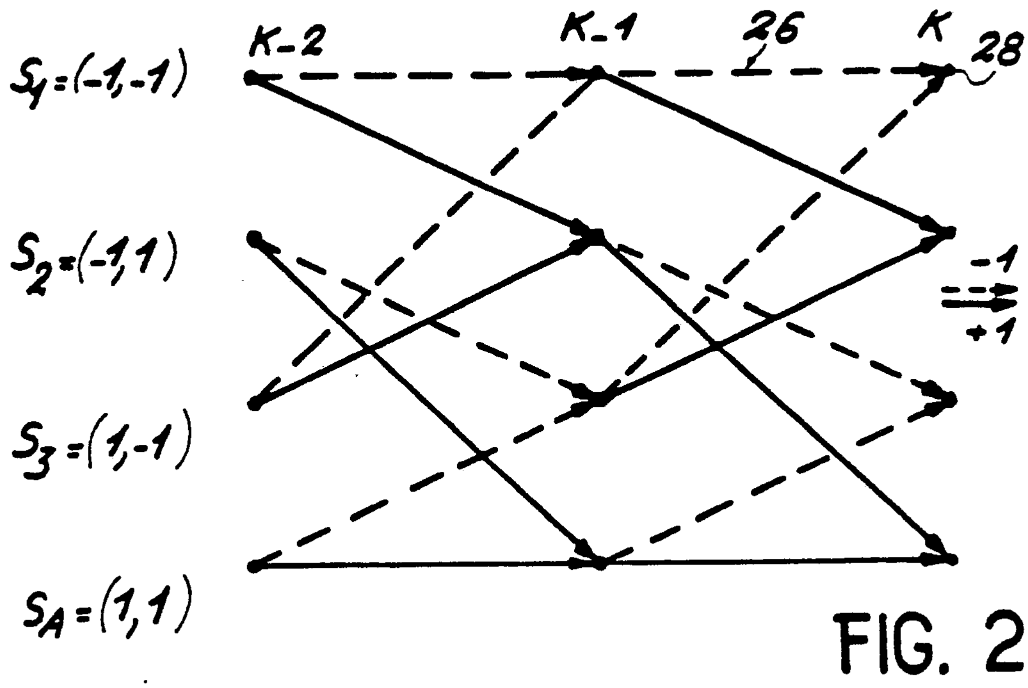
$S_1=(-1,-1)$
$S_2=(-1,1)$
$S_3=(1,-1)$
$S_A=(1,1)$
K-2
K-1
26
K
28
-1
+1

FIG. 2

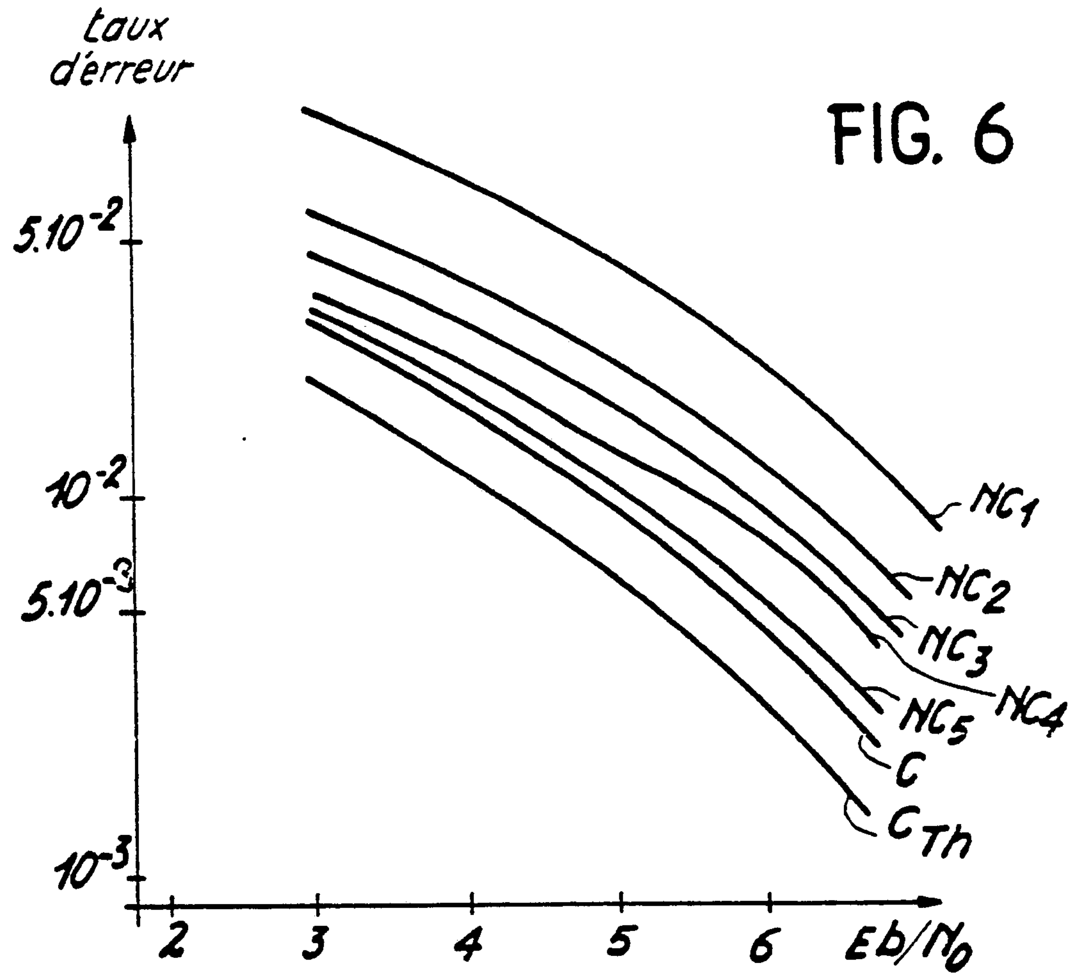
taux d'erreur
5.10^-2
10^-2
5.10^-3
10^-3
2
3
4
5
6
Eb/N0
NC1
NC2
NC3
NC4
NC5
C
CTh

FIG. 6

FIG. 3

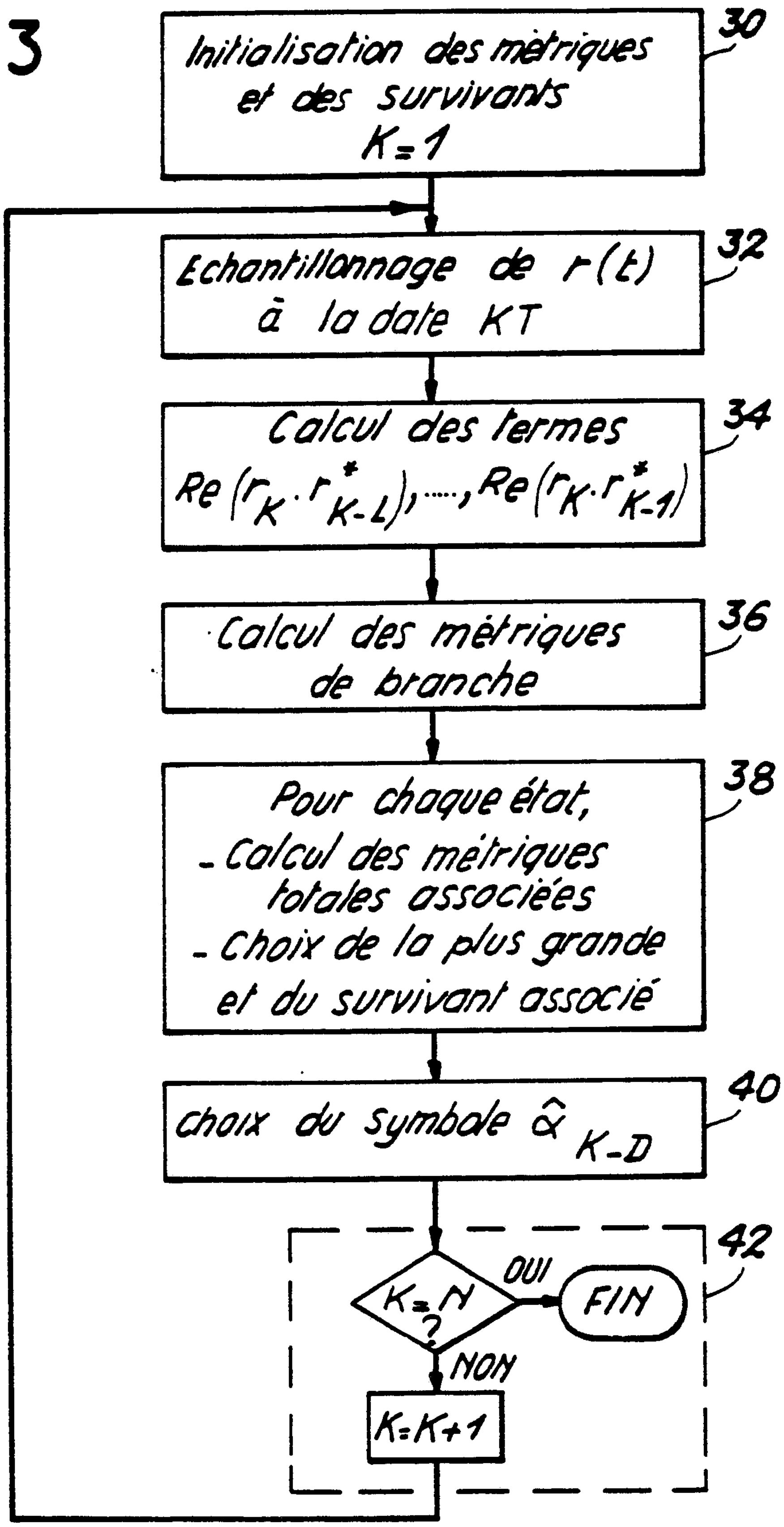

Initialisation des métriques et des survivants K=1
30
Echantillonnage de r(t) à la date KT
32
Calcul des termes Re(r_K · r*_{K-L}),......, Re(r_K · r*_{K-1})
34
Calcul des métriques de branche
36
Pour chaque état,
- Calcul des métriques totales associées
- Choix de la plus grande et du survivant associé
38
choix du symbole α̂ K-D
40
K=N ?
OUI
FIN
NON
K=K+1
42

FIG. 4

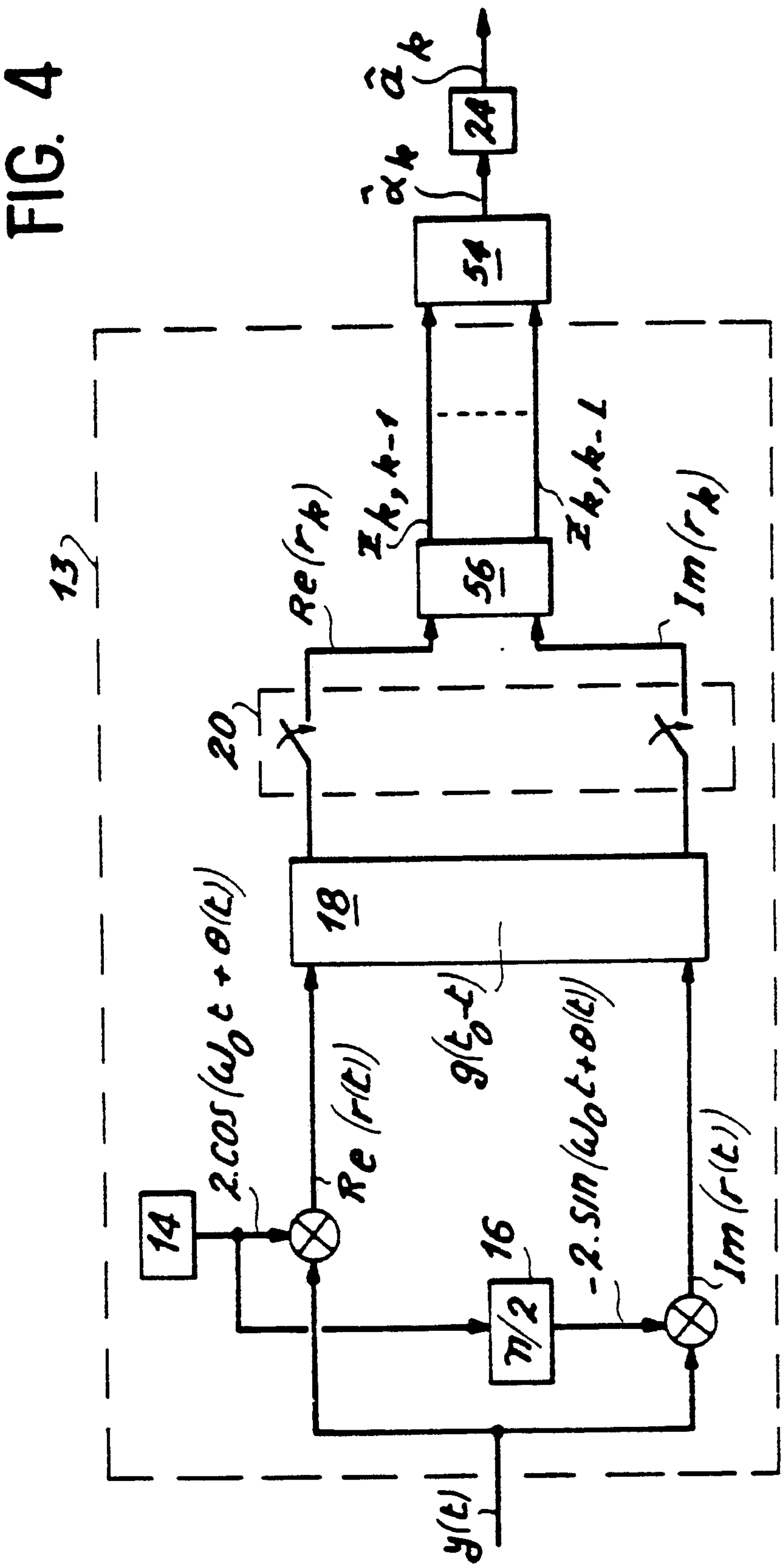
13
14
2.COS(ω0t + θ(t))
Re(r(t))
16
π/2
-2.SIN(ω0t+θ(t))
Im(r(t))
g(t0-t)
18
20
Re(rk)
Im(rk)
56
Zk,k-1
Zk,k-L
54
α̃k
24
α̂k
y(t)

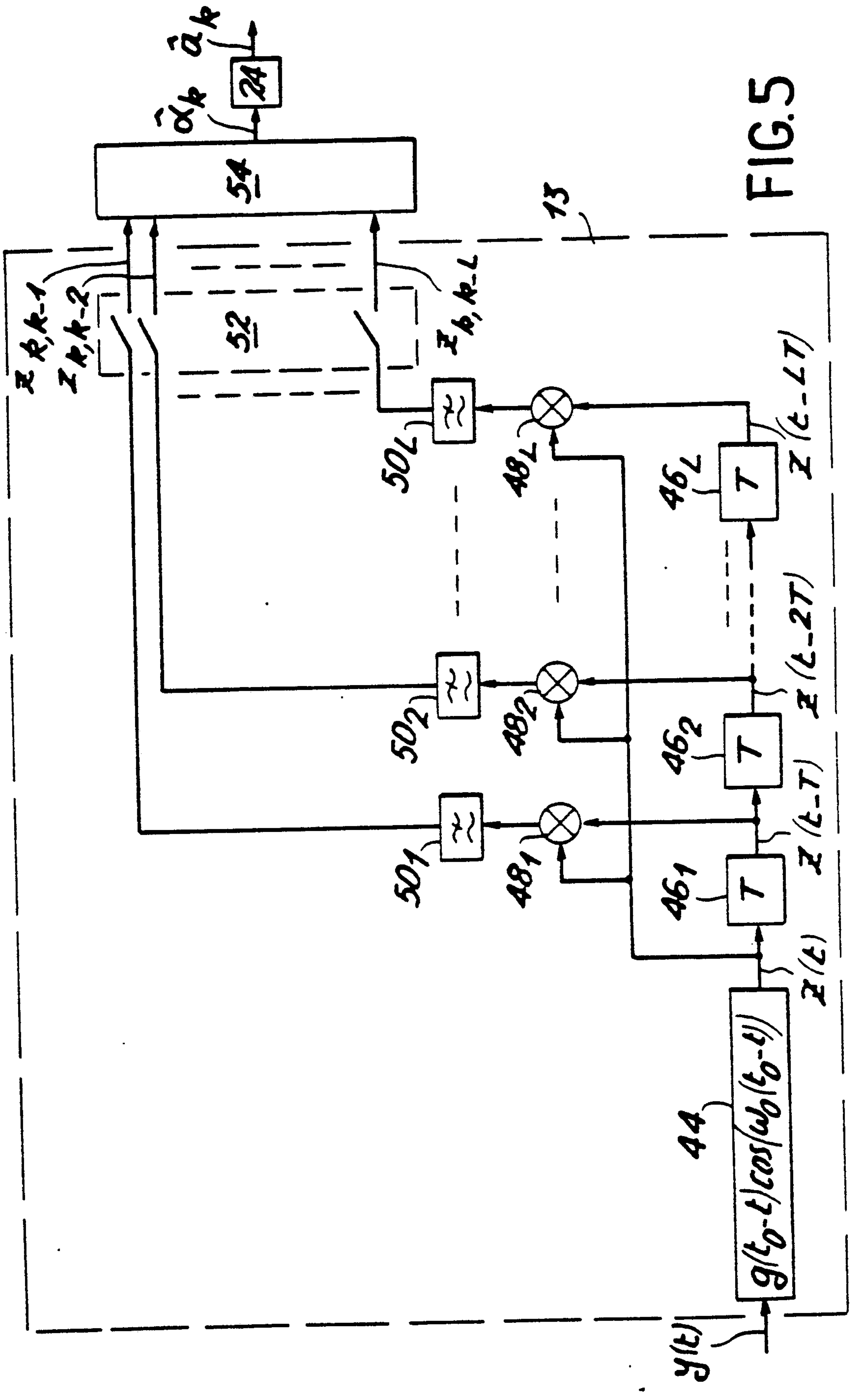

13
44
g(t0-t)cos(ω0(t0-t))
y(t)
x(t)
x(t-T)
x(t-2T)
x(t-LT)
461
462
46L
T
481
482
48L
501
502
50L
52
54
24
xk,k-1
xk,k-2
xk,k-L
α̂k
âk


FIG.5